# EUROPEAN PATENT SPECIFICATION

(11) **EP 4 074 634 B1**
(45) Date of publication and mention of the grant of the patent: **11.11.2026**
(21) Application number: 21818892.8
(22) Date of filing: 01.06.2021
(51) Int. Cl.: B65G 37/00, B65G 47/14, B65G 47/90, H01M 50/20, H01M 50/244

(54) **AUTOMATIC SUPPLY SYSTEM OF BOLT AND NUT FOR BATTERY PACK ASSEMBLY**
SYSTEM ZUM AUTOMATISCHEN ZUFÜHREN VON BOLZEN UND MUTTER ZUR MONTAGE EINES AKKUPACKS
SYSTÈME D'ALIMENTATION AUTOMATIQUE DE BOULON ET ÉCROU D'ASSEMBLAGE DE BLOC-BATTERIE

(30) Priority: 02.06.2020 KR 20200066466
(43) Date of publication of application: 19.10.2022
(73) Proprietor: LG Energy Solution, Ltd., Seoul 07335 (KR)
(72) Inventor: JUNG, In Seop, Daejeon 34122 (KR); KIM, Cheol Yung, Daejeon 34122 (KR); LEE, Ju Young, Daejeon 34122 (KR); HWANG, Seung Kyun, Daejeon 34122 (KR)
(74) Representative: Plasseraud IP
(86) International application number: PCT/KR2021/006799
(87) International publication number: WO 2021/246753

(56) References cited:
- CN-A- 106 672 584
- JP-A- 2003 267 526
- JP-A- H09 201 727
- JP-A- H09 201 727
- KR-A- 20110 072 271
- KR-A- 20190 045 756
- KR-A- 20190 045 756
- KR-A- 20190 071 909
- KR-B1- 101 100 744
- US-B2- 10 350 717

## Description

### [Technical Field]

This application claims the benefit of priority to Korean Patent Application No. 2020-0066466 filed on June 2, 2020.

The present invention relates to a system configured to automatically supply bolts and nuts necessary for each step of a battery pack assembly process.

### [Background Art]

With technological development of mobile devices, such as smartphones, laptop computers, and digital cameras, and an increase in demand therefor, research on secondary batteries, which are capable of being charged and discharged, has been actively conducted. In addition, secondary batteries, which are energy sources substituting for fossil fuels causing air pollution, have been applied to an electric vehicle (EV), a hybrid electric vehicle (HEV), a plug-in hybrid electric vehicle (P-HEV), and an energy storage system (ESS) .

There are a lithium ion battery, a lithium polymer battery, a nickel-cadmium battery, a nickel-hydride battery, and a nickel-zinc battery as secondary batteries that are widely used at present. The operating voltage of a unit secondary battery cell, i.e. a unit battery cell, is about 2.0V to 5.0V. In the case in which output voltage higher than the above operating voltage is required, therefore, a plurality of battery cells may be connected to each other in series to constitute a cell module assembly. In addition, cell module assemblies may be connected to each other in series or in parallel to constitute a battery module depending on required output voltage or charge and discharge capacities. In general, a battery pack is manufactured using at least one battery module by adding an additional component.

In order to manufacture a battery pack, a process of assembling parts constituting the battery pack is necessary, and various types and quantities of bolts and nuts are necessary in order to fasten the parts in each step of such an assembly process.

In a conventional bolt and nut supply apparatus, however, all of bolts and nuts that are necessary are automatically supplied at once, and a worker sorts bolts and nuts appropriate for each assembly step one by one and then performs fastening of the sorted bolts and nuts. Even in the case in which fastening of the bolts and the nuts is omitted by mistake of the worker, therefore, the worker may not immediately recognize this and may perform the next process, whereby quality of the battery pack may be deteriorated or defect of the battery pack may occur due to poor fastening.

Further prior art is described in JP H09 201727 A, US 10 350 717 B2, KR 2019 0045756 A, CN 106 672 584 A and JP 2003 267526 A. In particular, KR 2019 0045756 A discloses an automatic bolt and nut supply system according to the preamble of claim 1.

### [Disclosure]

### [Technical Problem]

The present invention has been made in view of the above problems, and it is an object of the present invention to provide a system capable of automatically supplying bolts and nuts necessary for each step as much as necessary at the time of assembly of a battery pack and an automatic bolt and nut supply method using the system.

### [Technical Solution]

An automatic bolt and nut supply system according to the present invention to accomplish the above object includes a plurality of feeders configured to store and supply the bolts and the nuts by type, a conveyance unit configured to convey the bolts and the nuts supplied from the plurality of feeders, a reception box configured to receive the bolts and the nuts conveyed by the conveyance unit, and a reception box transfer unit configured to transfer the reception box, wherein the conveyance unit includes a conveyance portion configured to store the bolts and the nuts supplied from the plurality of feeders and to supply the bolts and the nuts to the reception box, a driving portion configured to move the position of the conveyance portion, wherein the conveyance unit further comprises: a door portion located under the conveyance portion, the door portion being openable and closable, wherein the reception box is provided with a plurality of reception recesses, and the bolts and the nuts are received in each of the plurality of reception recesses as much as necessary for a corresponding step of a battery pack assembly process, wherein the plurality of reception recesses are painted with different colors so as to correspond one to one to steps of the assembly process such that the plurality of reception recesses are distinguished from each other, allowing to improve work efficiency by reducing the battery pack assembly time, wherein the feeder includes an alignment portion configured to store, align, and discharge the bolts and the nuts, a vibration portion configured to vibrate the alignment portion, a supply portion configured to supply the bolts and the nuts to the conveyance unit, and a case configured to allow the alignment portion and the vibration portion to be located therein, and wherein the vibration portion has an electromagnetic coil and a leaf spring, and generates vibration such that the alignment portion discharges the bolts and the nuts.

Also, in the automatic bolt and nut supply system according to the present invention, each of the plurality of feeders may be a bowl feeder.

Also, in the automatic bolt and nut supply system according to the present invention, the plurality of reception recesses may be marked with serial numbers so as to correspond one to one to steps of the assembly process such that the plurality of reception recesses are distinguished from each other.

In addition, an automatic bolt and nut supply method according to the present invention, using the automatic bolt and nut supply system described above, is a method of automatically supplying bolts and nuts necessary for each step as much as necessary by type at the time of assembly of a battery pack using the automatic bolt and nut supply system according to the present invention, the automatic bolt and nut supply method including (a) supplying the bolts and nuts to each of the plurality of feeders by type, (b) supplying the bolts and the nuts necessary for each step as much as necessary from the feeder to the conveyance unit, (c) conveying the bolts and the nuts from the conveyance unit to the plurality of reception recesses of the reception box, and (d) transferring the reception box having the bolts and the nuts received therein from a worktable to a wheel truck.

Also, the automatic bolt and nut supply method may according to the present invention further include moving the wheel truck, on which the reception box is seated, to the battery pack assembly process station after step (d).

### [Advantageous effects]

In an automatic bolt and nut supply system according to the present invention, it is possible to automatically supply bolts and nuts in type and quantity required for each assembly step, whereby it is possible to prevent deterioration in quality of a battery pack or defect of the battery pack caused as a result of fastening of the bolts and the nuts being omitted by mistake of a worker.

In addition, the automatic bolt and nut supply system according to the present invention has an advantage in that bolts and nuts necessary for individual steps are supplied in a state of being distinguished from each other, and therefore it is possible to improve assembly work efficiency.

### [Description of Drawings]

FIG. 1 is a side view showing an automatic bolt and nut supply system according to an embodiment of the present invention.
FIG. 2 is a side view showing the automatic bolt and nut supply system according to the embodiment of the present invention including a reception box transfer unit.
FIG. 3 is a plan view showing the automatic bolt and nut supply system according to the embodiment of the present invention.
FIG. 4 is a schematic view schematically showing components of a feeder according to the present invention.
FIG. 5 is a perspective view showing a reception box seated on a worktable according to the present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an automatic bolt and nut supply system according to the present invention will be described with reference to the accompanying drawings.

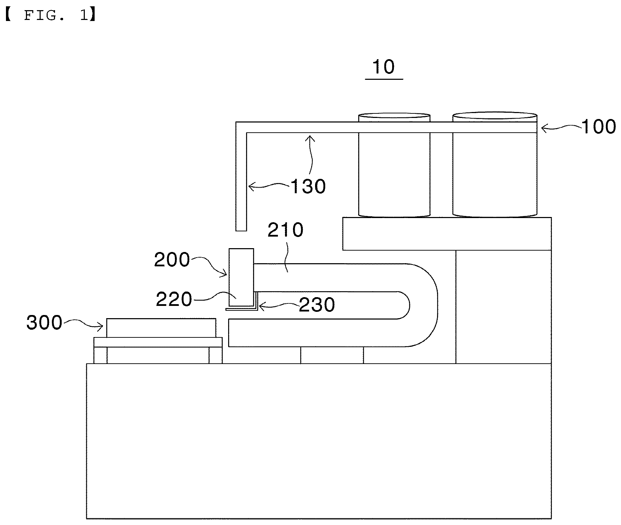

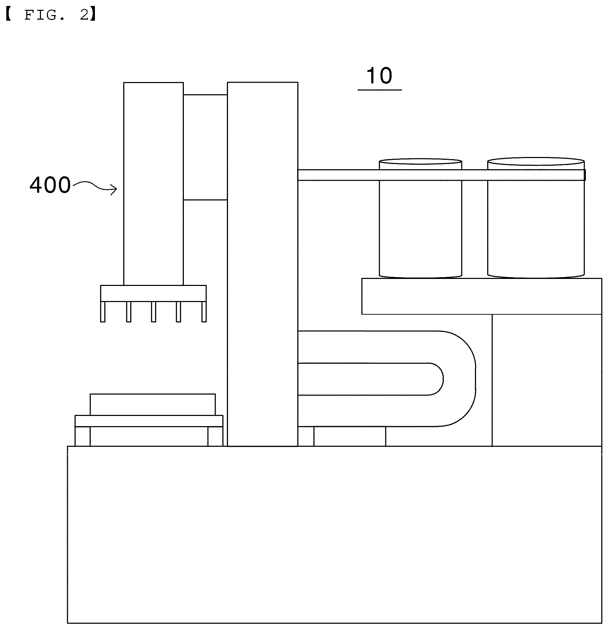

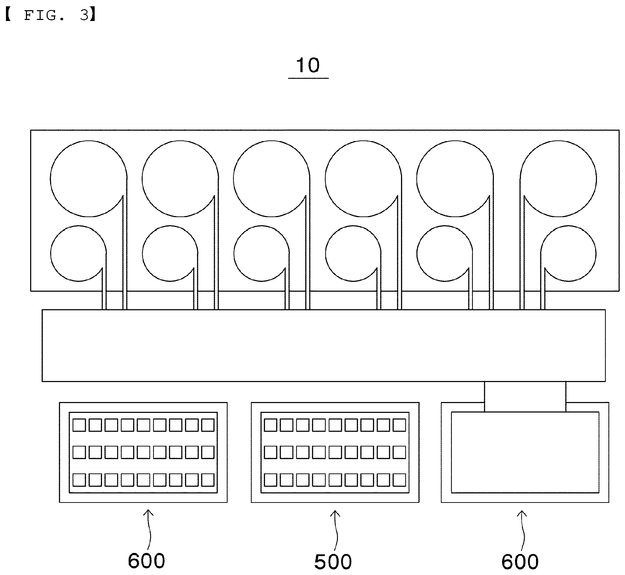

FIG. 1 is a side view showing an automatic bolt and nut supply system according to a first preferred embodiment of the present invention, FIG. 2 is a side view showing the automatic bolt and nut supply system including a reception box transfer unit, which is omitted from FIG. 1, and FIG. 3 is a plan view showing the automatic bolt and nut supply system according to the first embodiment of the present invention when viewed from above.

When describing the automatic bolt and nut supply system 10 with reference to FIGS. 1 to 3, the automatic bolt and nut supply system 10 according to the present invention includes a plurality of feeders 100 configured to store bolts and nuts by type and to supply the bolts and the nuts as much as necessary, a conveyance unit 200 configured to convey the bolts and the nuts supplied from the feeders 100 in order to supply the bolts and the nuts to a reception box, the reception box 300 having reception recesses 310 configured to receive the bolts and the nuts therein, a reception box transfer unit 400 configured to transfer the reception box 300, and a worktable 500 configured to allow the reception box 300 to be placed thereon such that the bolts and the nuts are supplied.

A feeder 100 refers to a device configured to automatically align and supply parts, and generally refers to a device configured to sort, align, and supply parts in a direction in which the parts can be used using vibration.

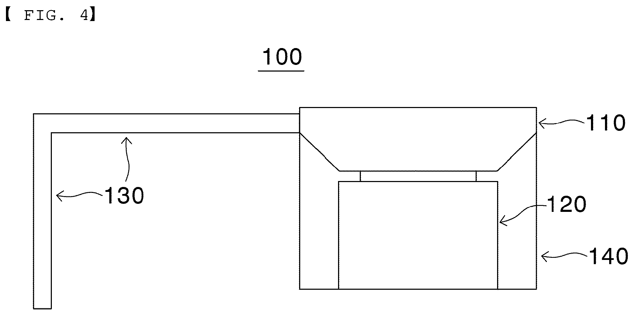

When describing the feeder 100 in more detail with reference to FIG. 4, the feeder 100 includes an alignment portion 110 configured to store, align, and discharge the bolts and the nuts, a vibration portion 120 configured to generate vibration and to apply the vibration to the alignment portion, a supply portion 130 serving as a passage configured to allow the bolts and the nuts of the alignment portion 110 to be discharged therealong, and a case 140 configured to wrap the alignment portion 110 and the vibration portion 120 so as to be located therein.

Here, the vibration portion 120 has an electromagnetic coil and a leaf spring, and serves to generate vibration having a desired frequency in a process in which the leaf spring is deformed as the result of operation of the electromagnetic coil and is then restored by elasticity. Due to such vibration, the parts stored in the alignment portion 110 are aligned and discharged out of the alignment portion 110.

A representative example of a feeder using vibration is a bowl feeder. The bowl feeder is a feeder configured to have a structure in which a bowl corresponding to the alignment portion 110 and a vibration portion 120 configured to generate vibration are coupled to each other. Depending on the shape thereof, the bowl feeder is classified as a cylindrical bowl feeder, a stepped bowl feeder, or a plate type bowl feeder.

It is preferable for the feeders 100 to be provided in numbers corresponding to types of bolts and nuts used in the battery pack assembly process such that one feeder 100 can separately store only one kind of bolts or nuts.

Although the feeder using vibration has been described above by way of example, the automatic bolt and nut supply system 10 according to the present invention is not limited thereto, and any of various known feeders capable of performing the same function may be used.

Meanwhile, the conveyance unit 200 includes a conveyance portion 220 configured to store the bolts and the nuts supplied from the feeders 100 and to supply the bolts and the nuts to the reception recesses 310 of the reception box 300, the conveyance portion being open at upper and lower parts thereof; a driving portion 210 connected to the conveyance portion 220, the driving portion being configured to drive the conveyance portion 220 forwards, rearwards, leftwards, and rightwards; and an openable and closable door portion 230 located under the conveyance portion 220, the door portion being configured to remain closed until the conveyance portion 220 moves above a corresponding one of the reception recesses 310 of the reception box 300 after the bolts and the nuts are supplied from the feeders 100 and to be opened when the bolts and the nuts are supplied to the reception box 300.

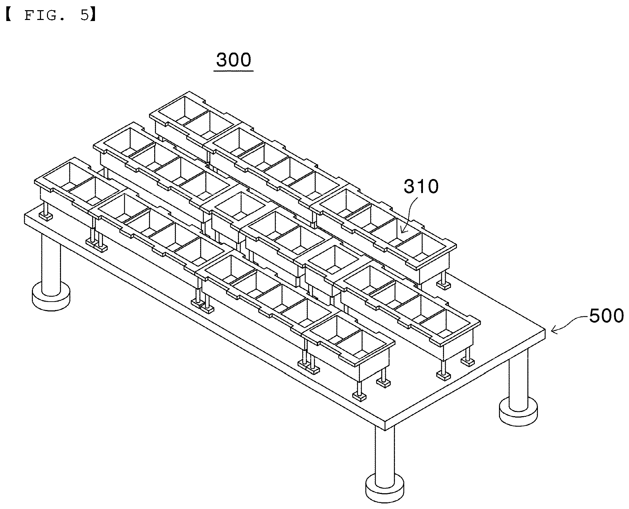

When describing the reception box 300 in detail with reference to FIG. 5, the reception box 300 is configured to have a structure in which a plurality of reception recesses 310 configured to receive the bolts and the nuts therein is connected to each other. The number of reception recesses 310 provided in one reception box 300 may be variously selected depending on types and quantities of bolts and nuts necessary in the battery pack assembly process. Individual reception recesses 310 may be coupled to each other as much as necessary to constitute a reception box 300, or a desired number of reception recesses 310 may be formed in a frame formed as one body to manufacture a reception box.

Meanwhile, the shape of the reception recesses 310 is not limited to what is shown in FIG. 5. The reception recesses may be formed in any shape as long as the reception recesses are capable of stably receiving the bolts and the nuts therein and are usable in the assembly process.

In addition, the reception recesses 310 of the reception box 300 are painted with different colors so as to correspond one to one to assembly steps such that the reception recesses are distinguished from each other, or may be marked with serial numbers, such as numerals or letters, such that the reception recesses are distinguished from each other. Since a correct quantity of bolts and nuts can be supplied in each assembly step through the above methods, it is possible to prevent defects of a battery pack from occurring as a result of a worker omitting fastening by mistake during the assembly process or omitted bolts or nuts that have not been recognized by the worker entering the battery pack during work. In addition, since the bolts and the nuts necessary for individual steps are distinguished from each other, it is possible to improve work efficiency, and therefore it is possible to reduce battery pack assembly time.

When describing the reception box transfer unit 400 with reference to FIGS. 2 and 3, the reception box transfer unit 400 is a device configured to transfer the reception box 300, before supply of the bolts and the nuts, on a wheel truck 600 to a predetermined position of the worktable 500 and to transfer the reception box 300, after supply of the bolts and the nuts, on the worktable 500 to another wheel truck 600 in an empty state.

When describing a method of automatically supplying bolts and nuts using the automatic bolt and nut supply system 10 according to the present invention described above, first, bolts and nuts are supplied to the plurality of feeders 100 by type, and subsequently, each feeder 100 supplies bolts and nuts necessary for each step to the conveyance portion 220 of the conveyance unit 200. The bolts and the nuts are conveyed and supplied to a corresponding one of the reception recesses 310 of the reception box 300 by the conveyance unit 200. After supply of necessary bolts and nuts is completed, the reception box 300 is transferred from the worktable 500 to the wheel truck 600 by the reception box transfer unit 400. Subsequently, the wheel truck 600, on which the reception box 300 is seated, is moved to a battery pack assembly process station such that the bolts and the nuts are used to fasten parts in each step of the battery pack assembly process.

A battery pack assembled through the above process may be used as a power supply source for an electric vehicle (EV), a hybrid electric vehicle (HEV), a plug-in hybrid electric vehicle (P-HEV), or an energy storage system (ESS).

Although the specific details of the present invention have been described in detail, those skilled in the art will appreciate that the detailed description thereof discloses only preferred embodiments of the present invention and thus does not limit the scope of the present invention.

### (Description of Reference Numerals)

10: Automatic bolt and nut supply system
100: Feeder
110: Alignment portion
120: Vibration portion
130: Supply portion
140: Case
200: Conveyance unit
210: Driving portion
220: Conveyance portion
230: Door portion
300: Reception box
310: Reception recess
400: Reception box transfer unit
500: Worktable
600: Wheel truck

## Claims

1. An automatic bolt and nut supply system (10) configured to automatically supply bolts and nuts necessary for each step as much as necessary by type at a time of assembly of a battery pack, the automatic bolt and nut supply system comprising:
a plurality of feeders (100) configured to store and supply the bolts and the nuts by type,
each of the plurality of feeders (100) comprising an alignment portion (110) configured to store, align, and discharge the bolts and the nuts, a vibration portion (120) configured to vibrate the alignment portion (110), and a supply portion (130) configured to supply the bolts and the nuts to a conveyance unit (200),
the conveyance unit (200) being configured to convey the bolts and the nuts supplied from the plurality of feeders (100) ;
a reception box (300) configured to receive the bolts and the nuts conveyed by the conveyance unit (200),
wherein the reception box (300) is provided with a plurality of reception recesses(310), and the bolts and the nuts are received in each of the plurality of reception recesses as much as necessary for a corresponding step of a battery pack assembly prociess,
a reception box transfer unit (400) configured to transfer the reception box (300),
wherein the conveyance unit (200) comprises:
a conveyance portion (220) configured to supply the bolts and the nuts to the reception box (300);
a driving portion (210) configured to move a position of the conveyance portion (220),
**characterized in that**
the conveyance portion 220 is configured to store the bolts and the nuts supplied from the plurality of feeders (100) and that
the conveyance unit (200) further comprises:
a door portion (230) located under the conveyance portion (220), the door portion being openable and closable,
wherein the plurality of reception recesses (310) are painted with different colors so as to correspond one to one to steps of the assembly process such that the plurality of reception recesses are distinguished from each other, allowing to improve work efficiency by reducing the battery pack assembly time,
wherein each of the plurality of feeders (100) comprises:
a case (140) configured to allow the alignment portion and the vibration portion to be located therein, and
wherein the vibration portion (120) has an electromagnetic coil and a leaf spring, and generates vibration such that the alignment portion (110) discharges the bolts and the nuts.

2. The automatic bolt and nut supply system (10) according to claim 1, wherein each of the plurality of feeders (100) is a bowl feeder.

3. The automatic bolt and nut supply system (10) according to claim 1, wherein the plurality of reception recesses (310) are marked with serial numbers so as to correspond one to one to steps of the assembly process such that the plurality of reception recesses are distinguished from each other.

4. An automatic bolt and nut supply method, using an automatic bolt and nut supply system (10) with the features of at least one of the preceding claims, of automatically supplying bolts and nuts necessary for each step as much as necessary by type at a time of assembly of a battery pack using the automatic bolt and nut supply system (10) according to any one of claims 1 to 3, the automatic bolt and nut supply method comprising:
(a) supplying the bolts and nuts to each of the plurality of feeders (100) by type;
(b) supplying the bolts and the nuts necessary for each step as much as necessary from the feeder (100) to the conveyance unit (200);
(c) conveying the bolts and the nuts from the conveyance unit (200) to the plurality of reception recesses (310) of the reception box (300); and
(d) transferring the reception box (300) having the bolts and the nuts received therein from a worktable to a wheel truck (600).

5. The automatic bolt and nut supply method according to claim 4, further comprising moving the wheel truck (600), on which the reception box (300) is seated, to the battery pack assembly process station after step (d).

## Patentansprüche

1. Automatisches Zuführsystem für Schrauben und Muttern (10), das dafür konfiguriert ist, Schrauben und Muttern, die für jeden Schritt erforderlich sind, in der erforderlichen Menge nach Typ zum Zeitpunkt der Montage eines Batteriepacks automatisch zuzuführen, wobei das automatische Zuführsystem für Schrauben und Muttern umfasst:
eine Vielzahl von Zuführungseinrichtungen (100), die dafür konfiguriert sind, die Schrauben und Muttern nach Typ zu lagern und zuzuführen,
wobei jede der Vielzahl von Zuführungseinrichtungen (100) einen Ausrichtungsabschnitt (110), der zum Lagern, Ausrichten und Ausgeben der Schrauben und Muttern konfiguriert ist, einen Vibrationsabschnitt (120), der dafür konfiguriert ist, den Ausrichtungsabschnitts (110) in Schwingung zu versetzen, und einen Zuführabschnitt (130), der zum Zuführen der Schrauben und Muttern zu einer Fördereinheit (200) konfiguriert ist, umfasst,
wobei die Fördereinheit (200) dafür konfiguriert ist, die von der Vielzahl von Zuführungseinrichtungen (100) zugeführten Schrauben und Muttern zu befördern;
eine Aufnahmebox (300), die dafür konfiguriert ist, die von der Fördereinheit (200) geförderten Schrauben und Muttern aufzunehmen,
wobei die Aufnahmebox (300) mit einer Vielzahl von Aufnahmeausnehmungen (310) versehen ist, und die Schrauben und die Muttern in jeder der Vielzahl von Aufnahmeausnehmungen in der für einen entsprechenden Schritt eines Batteriepack-Montageprozesses erforderlichen Menge aufgenommen werden,
eine Aufnahmebox-Transfereinheit (400), die dafür konfiguriert ist, die Aufnahmebox (300) zu transferieren,
wobei die Fördereinheit (200) umfasst:
einen Förderabschnitt (220), der dafür konfiguriert ist, die Schrauben und die Muttern der Aufnahmebox (300) zuzuführen;
einen Antriebsabschnitt (210), der dafür konfiguriert ist, eine Position des Förderabschnitts (220) zu verändern,
**dadurch gekennzeichnet, dass**
der Förderabschnitt (220) dafür konfiguriert ist, die von der Vielzahl von Zuführungseinrichtungen (100) zugeführten Schrauben und Muttern zu lagern, und dadurch dass
die Fördereinheit (200) ferner umfasst:
einen Türabschnitt (230), der sich unter dem Förderabschnitt (220) befindet, wobei der Türabschnitt sich öffnen und schließen lässt,
wobei die Vielzahl von Aufnahmeausnehmungen (310) in unterschiedlichen Farben gestrichen sind, um eins zu eins den Schritten des Montageprozesses zu entsprechen, so dass die Vielzahl von Aufnahmeausnehmungen voneinander unterschieden werden, was eine Verbesserung der Arbeitseffizienz durch Reduzierung der Montagezeit des Batteriepacks ermöglicht,
wobei jede der Vielzahl von Zuführungseinrichtungen (100) umfasst:
ein Gehäuse (140), das so konfiguriert ist, dass der Ausrichtungsabschnitt und der Vibrationsabschnitt darin angeordnet werden können, und
wobei der Vibrationsabschnitt (120) eine elektromagnetische Spule und eine Blattfeder aufweist und eine Schwingung erzeugt, so dass der Ausrichtungsabschnitt (110) die Schrauben und die Muttern ausgibt.

2. Das automatische Zuführsystem für Schrauben und Muttern (10) nach Anspruch 1,
wobei jede der Vielzahl von Zuführungseinrichtungen (100) ein Fördertopf ist.

3. Das automatische Zuführsystem für Schrauben und Muttern (10) nach Anspruch 1,
wobei die Vielzahl von Aufnahmeausnehmungen (310) mit Seriennummern markiert sind, um eins zu eins den Schritten des Montageprozesses zu entsprechen, so dass die Vielzahl von Aufnahmeausnehmungen voneinander unterschieden werden.

4. Automatisches Zuführverfahren für Schrauben und Muttern unter Verwendung eines automatischen Zuführsystems für Schrauben und Muttern (10) mit den Merkmalen mindestens eines der vorstehenden Ansprüche, zum automatischen Zuführen von Schrauben und Muttern, die für jeden Schritt erforderlich sind, in der erforderlichen Menge und nach Typ zum Zeitpunkt der Montage eines Batteriepacks unter Verwendung des automatischen Zuführsystems für Schrauben und Muttern (10) nach einem der Ansprüche 1 bis 3, wobei das automatische Zuführverfahren für Schrauben und Muttern umfasst:
(a) Zuführen der Schrauben und Muttern zu jeder der Vielzahl von Zuführungseinrichtungen (100) nach Typ;
(b) Zuführen der für jeden Schritt erforderlichen Schrauben und Muttern in der erforderlichen Menge von der Zuführungseinrichtung (100) zur Fördereinheit (200);
(c) Befördern der Schrauben und Muttern von der Fördereinheit (200) zu der Vielzahl von Aufnahmeausnehmungen (310) der Aufnahmebox (300); und
(d) Transferieren der Aufnahmebox (300) mit den darin aufgenommenen Schrauben und Muttern von einem Arbeitstisch zu einem Radwagen (600).

5. Das automatische Zuführverfahren für Schrauben und Muttern nach Anspruch 4, ferner umfassend das Bewegen des Radwagens (600), auf dem die Aufnahmebox (300) sitzt, zur Station des Batteriepack-Montageprozesses nach Schritt (d).

## Revendications

1. Système d'alimentation automatique en boulons et écrous (10) configuré pour alimenter automatiquement les boulons et les écrous nécessaires à chaque étape, en quantité nécessaire par type, au moment de l'assemblage d'un bloc-batterie, le système d'alimentation automatique en boulons et écrous comprenant :
une pluralité d'alimentateurs (100) configurés pour stocker et alimenter les boulons et les écrous par type,
chacun de la pluralité d'alimentateurs (100) comprenant une partie d'alignement (110) configurée pour stocker, aligner et décharger les boulons et les écrous, une partie de vibration (120) configurée pour faire vibrer la partie d'alignement (110), et une partie d'alimentation (130) configurée pour alimenter les boulons et les écrous à une unité de transport (200),
l'unité de transport (200) étant configurée pour transporter les boulons et les écrous alimentés par la pluralité d'alimentateurs (100) ;
une boîte de réception (300) configurée pour recevoir les boulons et les écrous transportés par l'unité de transport (200),
dans lequel la boîte de réception (300) est pourvue d'une pluralité d'évidements de réception (310), et les boulons et les écrous sont reçus dans chacun de la pluralité d'évidements de réception en quantité nécessaire pour une étape correspondante d'un processus d'assemblage de bloc-batterie,
une unité de transfert de boîte de réception (400) configurée pour transférer la boîte de réception (300),
dans lequel l'unité de transport (200) comprend :
une partie de transport (220) configurée pour alimenter les boulons et les écrous à la boîte de réception (300) ;
une partie d'entraînement (210) configurée pour déplacer une position de la partie de transport (220),
**caractérisé en ce que**
la partie de transport (220) est configurée pour stocker les boulons et les écrous alimentés par la pluralité d'alimentateurs (100) et **en ce que**
l'unité de transport (200) comprend en outre :
une partie de porte (230) située sous la partie de transport (220), la partie de porte pouvant être ouverte et fermée,
dans lequel la pluralité d'évidements de réception (310) sont peints de différentes couleurs de manière à correspondre un à un aux étapes du processus d'assemblage, de sorte que la pluralité d'évidements de réception sont distingués les uns des autres, permettant d'améliorer l'efficacité du travail en réduisant le temps d'assemblage du bloc-batterie,
dans lequel chacun de la pluralité d'alimentateurs (100) comprend :
un boîtier (140) configuré pour permettre à la partie d'alignement et à la partie de vibration d'y être situées, et
dans lequel la partie de vibration (120) comporte une bobine électromagnétique et un ressort à lames, et génère une vibration de telle sorte que la partie d'alignement (110) décharge les boulons et les écrous.

2. Le système d'alimentation automatique en boulons et écrous (10) selon la revendication 1, dans lequel chacun de la pluralité d'alimentateurs (100) est un alimentateur à bol.

3. Le système d'alimentation automatique en boulons et écrous (10) selon la revendication 1, dans lequel la pluralité d'évidements de réception (310) sont marqués de numéros de série de manière à correspondre un à un aux étapes du processus d'assemblage, de sorte que la pluralité d'évidements de réception sont distingués les uns des autres.

4. Procédé d'alimentation automatique en boulons et écrous, utilisant un système d'alimentation automatique en boulons et écrous (10) avec les caractéristiques d'au moins une des revendications précédentes, d'alimentation automatique des boulons et écrous nécessaires à chaque étape, en quantité nécessaire par type, au moment de l'assemblage d'un bloc-batterie en utilisant le système d'alimentation automatique en boulons et écrous (10) selon l'une quelconque des revendications 1 à 3, le procédé d'alimentation automatique en boulons et écrous comprenant :
(a) l'alimentation des boulons et écrous à chacun de la pluralité d'alimentateurs (100) par type ;
(b) l'alimentation des boulons et des écrous nécessaires à chaque étape, en quantité nécessaire, depuis l'alimentateur (100) vers l'unité de transport (200) ;
(c) le transport des boulons et des écrous depuis l'unité de transport (200) vers la pluralité d'évidements de réception (310) de la boîte de réception (300) ; et
(d) le transfert de la boîte de réception (300) contenant les boulons et les écrous qui y sont reçus d'une table de travail vers un chariot à roues (600).

5. Le procédé d'alimentation automatique en boulons et écrous selon la revendication 4, comprenant en outre le déplacement du chariot à roues (600), sur lequel la boîte de réception (300) est assise, vers la station du processus d'assemblage du bloc-batterie après l'étape (d).
